Europäisches Patentamt

European Patent Office

Office européen des brevets

(19)

(11) Veröffentlichungsnummer: **0 095 168**
**B1**

## (12) EUROPÄISCHE PATENTSCHRIFT

(45) Veröffentlichungstag der Patentschrift:
28.10.87

(21) Anmeldenummer: 83105038.0

(22) Anmeldetag: 14.05.81

(60) Veröffentlichungsnummer der früheren Anmeldung
nach Art. 76 EPÜ: 0040406

(51) Int. Cl.⁴: **B 30 B 11/00**

(54) Verfahren zur Würfelqualitätsmessung und eine Würfelqualitätsmessvorrichtung.

(43) Veröffentlichungstag der Anmeldung:
30.11.83 Patentblatt 83/48

(45) Bekanntmachung des Hinweises auf die Patenterteilung:
28.10.87 Patentblatt 87/44

(84) Benannte Vertragsstaaten:
CH DE FR GB IT LI NL SE

(56) Entgegenhaltungen:
US - A - 1 459 143
US - A - 3 279 238
US - A - 3 427 683
US - A - 3 972 220
US - A - 4 179 916
US - A - 4 211 740

(73) Patentinhaber: **Gebrüder Bühler AG, CH-9240 Uzwil (CH)**

(72) Erfinder: **Schaffner, Hanspeter, Armetsholzstrasse 2, CH-9244 Niederuzwil (CH)**

(74) Vertreter: **Dipl.-Phys.Dr. Manitz Dipl.-Ing., Dipl.-Wirtsch. Finsterwald Dipl.-Chem.Dr. Heyn Dipl.-Phys. Rotermund Morgan, B.Sc.(Phys.), Robert-Koch-Strasse 1, D-8000 München 22 (DE)**

## Beschreibung

Die Erfindung betrifft ein Verfahren zur Würfelqualitätsmessung, bei welcher die Würfel zur Erzeugung von Abrieb für eine vorgegebene Zeit mittels eines strömenden gasförmigen Fördermediums, insbesondere Luft, in einem Prüfgerät umhergewirbelt werden, der erzeugte Abrieb von den noch stückigen Würfeln getrennt und der Prozentsatz der noch stückigen Würfel bzw. ein entsprechender Wert ermittelt wird, sowie eine Würfelqualitätsmessvorrichtung zur Durchführung dieses Verfahrens. Diese Anmeldung ist eine Teilanmeldung aus der europäischen Anmeldung 81 103 714.2 (EP-A-0 040 406).

Futterwürfel werden üblicherweise in einer Futterwürfelpresse hergestellt, welche eine Pressbohrungen aufweisende Pressform enthält. Drehbare Pressrollen wirken mit dieser Pressform zum Auspressen des auf die Pressform eingegebenen Produktes radial nach aussen durch die Pressbohrungen zusammen. Die ausgepressten Stränge werden in Würfel genannte Stücke zerkleinert und die Würfel durch einen Kühler geführt. Die Pressform ist vorzugsweise ringförmig und zu einer Drehbewegung antreibbar.

Ist die Qualität der Würfel, auch Pellets genannt, ungenügend (unter Qualität wird in erster Linie ihre Festigkeit und Freiheit von feinen Teilen bzw. Abrieb verstanden), so treten Verluste auf, weil die Tiere meistens das den Abrieb bildende Mehl nicht fressen, oder weil bei zu geringer Festigkeit der Würfel Schwierigkeiten bei den automatischen Fütterungssystemen entstehen, was die Brauchbarkeit überhaupt in Frage stellt.

Bis heute erfolgt die Qualitätsbestimmung immer nach beendetem Kühlprozess mit Hilfe von Bestimmungsgeräten, die entweder die Härte der Würfel oder deren Abriebfestigkeit messen.

Bei dem eingangs genannten Verfahren, das aus dem Prospekt «The Holmen Pellet-Tester» vom April 1980 hervorgeht, und zudem in der Betriebsanweisung des «Holmen Pellet-Testers» näher erläutert wird, werden die Würfel pneumatisch gefördert, um Abrieb zu erzeugen. Diese bekannte Vorrichtung weist eine Zugabeeinrichtung für eine Würfelprobe, einen Abriebskreislauf, in dem die Würfelprobe mittels eines von einem Ventilator erzeugten Luftstroms umhergewirbelt und dabei Abrieb verursacht wird, und einen Auslass für den Abrieb und die noch stückigen Würfel auf. Der Abrieb und die noch stückigen Würfel werden mittels eines Sammelbehälters dem Auslass entnommen und danach gesiebt, um den Abrieb von den noch stückigen Würfeln zu trennen. Danach wird gewogen und der Gewichtsprozentsatz der noch stückigen Würfel ermittelt.

Die Bestimmung der Qualität ist aufwendig und bringt Zeit und Personalaufwand, Umtriebe usw. Das Resultat bezüglich der Würfelqualität kennt man, wenn überhaupt, erst 30 bis 60 Minuten nach dem Verpressen oder sogar später. Daher können die ermittelten Resultate nur in den wenigsten Fällen dazu benutzt werden, den Pelletierprozess bzw. das Pressen so zu steuern, dass direkt Verbesserungen an der Würfelqualität resultieren.

Das Ziel der vorliegenden Erfindung besteht nun darin, das eingangs genannte Verfahren bzw. die eingangs genannte Vorrichtung zur Durchführung dieses Verfahrens so weiterzubilden, dass mit geringem Aufwand die Messung der Würfelqualität vereinfacht und die hierfür erforderliche Zeit so verkürzt wird, dass das Messergebnis zur Steuerung einer Würfelpressanlage verwendet werden kann.

Zur verfahrensmässigen Lösung dieser Aufgabe sieht die Erfindung vor, dass nach Beendigung der vorgegebenen Zeit das strömende gasförmige Fördermedium zur automatischen Durchführung der Trennung innerhalb des Prüfgeräts derart eingestellt wird, dass der Abrieb beim Hinterlassen der noch stückigen Würfel mit dem strömenden gasförmigen Fördermedium mitgenommen wird. Die Trennung erfolgt bevorzugt durch Steuerung der Stärke des Luftstromes.

Das strömende gasförmige Fördermedium kann auch vorteilhafterweise zur Kühlung der Würfel benutzt werden.

Eine Würfelqualitätsmessvorrichtung der obengenannten Art mit einer Zugabeeinrichtung für die Würfelprobe, mit einem Abriebkreislauf, in dem die Würfelprobe mittels eines von einem Ventilator erzeugten Luftstroms zur Erzeugung von Abrieb umhergewirbelt wird und einem Auslass für den Abrieb bzw. die noch stückigen Würfel, und mit einer Waage zur Ermittlung des erzeugten Abriebs zeichnet sich dadurch aus, dass der Ventilator zwei Geschwindigkeitsstufen hat und dass nach Zugabe der Würfelprobe eine Steuereinrichtung die höhere Geschwindigkeitsstufe einschaltet, um die Würfelprobe im Abriebkreislauf zu bewegen und anschliessend auf die niedrigere Geschwindigkeitsstufe umschaltet und eine im Abriebkreislauf vorhandene Umlenkeinrichtung betätigt, um lediglich den Abrieb mit dem Luftstrom zu befördern und diesen aufgrund der gewählten Stellung der Umlenkeinrichtung zu dem Auslass zu lenken, und dass nach Abgabe des Abriebs die Steuereinrichtung wieder auf die höhere Geschwindigkeitsstufe umschaltet um die noch stückigen Würfel getrennt zum Auslass zu befördern.

Aufgrund der erfindungsgemässen Messung der Würfelqualität entfällt in zeitsparender Weise die Notwendigkeit, einen Sammelbehälter zu entfernen und einen Siebvorgang durchzuführen, um den Abrieb vor Durchführung des Wiegevorgangs von den noch stückigen Würfeln zu trennen. Somit kann die Würfelqualitätsmessung aufgrund der ersparten Zeit direkt nach der Pressung stattfinden und es können Qualitätsminderungen unverzüglich erkannt und korrigiert werden. Die durch das erfindungsgemässe Verfahren bzw. durch die Würfelqualitätsmessvorrichtung ermöglichte Regelung der Futterwürfelpresse lässt sich ohne weiteres so gestalten, dass sie innerhalb von einigen Sekunden bis einigen Minuten auf Qualitätsschwankungen reagiert, d. h. dass die Qualitätsregelung auch schon während der Betriebsphase stattfinden kann.

Es ist vorteilhaft, wenn die Würfel vor dem Messen der Qualität tiefgekühlt werden. Hierdurch wird nämlich eine schnelle Erhöhung der Festigkeit erreicht, die dann bereits eine Aussage über die Würfelqualität zulässt, die weitgehend der endgültigen Qualität nach dem Kühlen entspricht.

Eine besonders bevorzugte Verwirklichung der Erfindung kennzeichnet sich dadurch, dass die Messvorrichtung in kurzen Zeitabständen von z.B. 2 min einen kleinen Anteil ausgepresster Würfel aufnimmt, kühlt und in einem pneumatischen Abriebkreislauf umherwirbelt und dass nach einigen Umläufen das Verhältnis von entstandenem Mehl und noch vorhandenen Würfeln gemessen und als elektrisches Signal einem Pressensteuerungsgerät zugeführt wird.

Bevorzugte Ausführungsformen der Erfindung sind in den Unteransprüchen 5 bis 11 angegeben.

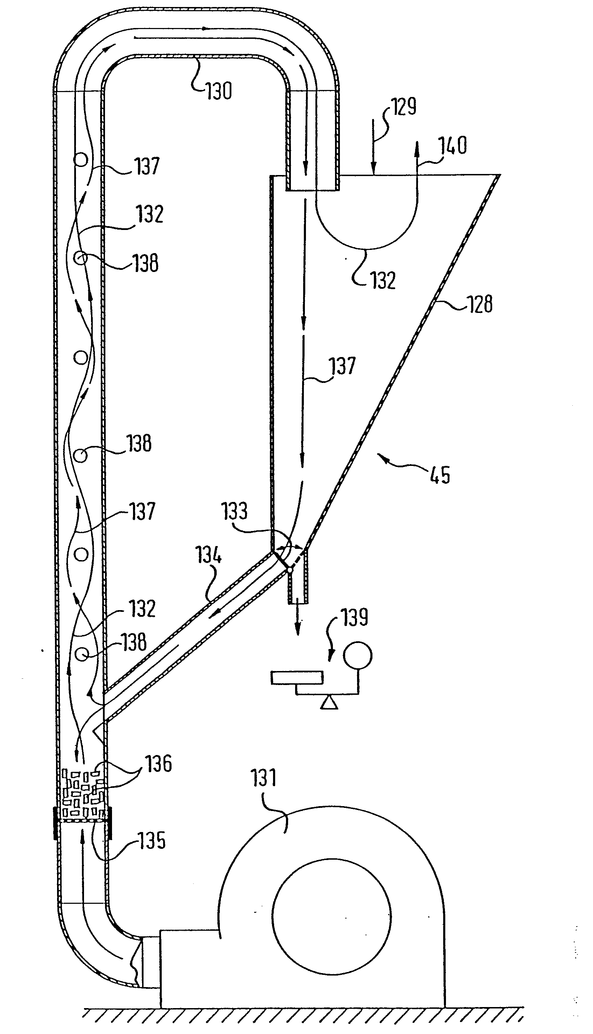

Die Erfindung wird im folgenden beispielsweise anhand der Zeichnung beschrieben, welche als einzige Figur eine Ausführungsform einer erfindungsgemässen Würfelqualitätsmessvorrichtung 45 zeigt.

Es wird in einen Zugabetrichter 128 in der durch einen Pfeil 129 angedeuteten Weise eine Würfelprobe von z.B. 100 g eingefüllt. In den Trichter 128 mündet oben seitlich ein Luftumlaufrohr 130, welches an seinem unteren Ende an einen Ventilator 131 mit zwei Geschwindigkeiten angeschlossen ist. Während der Einfüllung der Würfelprobe in den Trichter 128 wird der Ventilator 131 mit der geringeren Geschwindigkeitsstufe betrieben, wodurch ein Kühlluftstrom 132 erzielt wird, der die in den Trichter 128 hineinfallenden Würfel abkühlt.

Am Boden des Trichters 128 ist eine Umschaltklappe 133 vorgesehen, welche beim Einfüllen der Würfel in den Trichter 128 die in der Zeichnung gestrichelt dargestellte Position einnimmt, so dass die Würfel durch ein unten angesetztes Rohrstück 134 in den unteren Teil des Rohrs 130 eintreten können, in dem sich ein Sieb 135 befindet. Das Sieb 135 gestattet den Durchtritt der Luft von unten nach oben, verhindert aber ein weiteres Herabfallen der eingetretenen Würfel, welche mit 136 bezeichnet sind.

Nach etwa einminütiger Kühlung wird das Gebläse auf die zweite Geschwindigkeitsstufe umgeschaltet, welche so stark ist, dass nunmehr die Würfel auf einer durch die Linie 137 gekennzeichneten Bahn vom Luftstrom mitgerissen und in einem Abriebkreislauf ständig umhergewirbelt werden. Hierdurch kommt es durch das Aneinanderstossen der Würfel bzw. durch deren Anstossen an die Wandungen der Anlage zu einem gewissen Abrieb. Diese Wirkung kann noch durch in das Rohr 130 eingebaute Schikanen 138 gesteigert werden.

Die Schikanen 138 sind erfindungsgemäss in erster Linie in dem vertikalen Teil des Rohres 130 vorgesehen.

Dieser Abriebkreislauf wird für ca. 1 Minute aufrechterhalten.

Anschliessend wird dann das Gebläse wieder auf die kleine Luftmenge umgeschaltet. Nunmehr bleiben die schwereren noch stückigen Würfel bei 136 auf dem Sieb 135 liegen, während das abgeriebene Mehl noch vom Luftstrom 132 mitgenommen wird. Jetzt wird die Klappe 133 in die in ausgezogenen Linien dargestellte Lage umgeschwenkt, worauf der Luftstrom das abgeriebene Mehl auf eine schematisch bei 139 angedeutete Waage fallen lässt. Dort erfolgt eine automatische Wägung der abgeriebenen Mehlmenge.

Nach dem Wiegen wird das Mehl von der Waage entfernt und es wird das Gebläse wieder auf die höhere Geschwindigkeitsstufe umgeschaltet, welche auch zur pneumatischen Förderung der Würfel 136 ausreicht. Jetzt werden also die Würfel 136 durch das Rohr 130 und den Trichter 128 pneumatisch auf die Waage 139 gefördert und können ebenfalls gewogen werden.

Die beiden Wiegesignale werden elektrisch gespeichert, ins Verhältnis gesetzt und dann als elektrisches Signal dem Pressensteuerungsgerät zugeführt. Je höher der Abrieb ist, umso schlechter die Qualität der Würfel.

Dieser Zyklus kann etwa alle 2 Minuten wiederholt und vollautomatisch durchgeführt werden.

Die bei 140 aus dem Trichter 128 oben austretende Luft kann einem Luftfilter oder Zyklon zur Reinigung zugeführt werden.

**Patentansprüche**

1. Verfahren zur Würfelqualitätsmessung, bei welcher die Würfel zur Erzeugung von Abrieb für eine vorgegebene Zeit mittels eines strömenden gasförmigen Fördermediums, insbesondere Luft, in einem Prüfgerät umhergewirbelt werden, der erzeugte Abrieb von den noch stückigen Würfeln getrennt und der Prozentsatz der noch stückigen Würfel bzw. ein entsprechender Wert ermittelt wird, dadurch gekennzeichnet, dass nach Beendigung der vorgegebenen Zeit das strömende gasförmige Fördermedium zur automatischen Durchführung der Trennung innerhalb des Prüfgeräts derart eingestellt wird, dass der Abrieb beim Hinterlassen der noch stückigen Würfel mit dem Fördermedium mitgenommen wird.

2. Verfahren zur Würfelqualitätsmessung nach Anspruch 1, dadurch gekennzeichnet, dass die Trennung durch Steuerung der Stärke des Luftstroms erfolgt.

3. Verfahren nach Anspruch 1 oder 2, dadurch gekennzeichnet, dass das strömende gasförmige Fördermedium auch zur Kühlung der Würfel benutzt wird.

4. Würfelqualitätsmessvorrichtung zur Durchführung des Verfahrens nach einem der vorhergehenden Ansprüche mit einer Zugabeeinrichtung (128) für eine Würfelprobe, mit einem Abriebkreislauf (128, 134, 130), in dem die Würfelprobe mittels eines von einem Ventilator (131) erzeugten Luftstroms (137) umhergewirbelt und dabei Abrieb verursacht wird, mit einem Auslass für den Abrieb bzw. die noch stückigen Würfel, und mit einer Waage zur Bestimmung des erzeugten Abriebs, dadurch gekennzeichnet, dass der Ventilator (131) zwei Geschwindigkeitsstufen hat und dass nach Zugabe der Würfelprobe eine Steuereinrichtung die höhere Geschwindigkeitsstufe einschaltet, um die Würfelprobe im Abriebkreislauf (128, 134, 130) zu bewegen und anschliessend auf die niedrigere Geschwindigkeitsstufe umschaltet und eine im Abriebkreislauf vorhandenen Umlenkeinrichtung betätigt, um lediglich den Abrieb mit dem Luftstrom zu befördern und diesen aufgrund der gewählten Stellung der Umlenkeinrichtung zu dem Auslass zu lenken, und dass nach Abgabe des Abriebs die Steuereinrichtung wieder auf die höhere Geschwindigkeitsstufe umschaltet, um die noch stückigen Würfel getrennt zum Auslass zu befördern.

5. Würfelqualitätsmessvorrichtung nach Anspruch 4, dadurch gekennzeichnet, dass bei Zugabe der Würfelprobe die Steuereinrichtung zunächst die niedrigere Geschwindigkeitsstufe einschaltet, um die Würfelprobe zu kühlen.

6. Würfelqualitätsmessvorrichtung nach Anspruch 4, dadurch gekennzeichnet, dass der vom Ventilator (131) erzeugte Luftstrom gleichzeitig zur Kühlung der Würfelprobe dient.

7. Würfelqualitätsmessvorrichtung nach einem der Ansprüche 4 bis 6, gekennzeichnet durch ein Luftumlaufrohr (130) mit einem ersten vom Ventilator (131) im wesentlichen senkrecht nach oben wegführenden Rohrstück, einem zweiten vom ersten Rohrstück wieder nach unten führenden Rohrstück und einem dritten in das erste Rohrstück hineinführenden Rohrstück (134) und durch ein im ersten Rohrstück unterhalb des dritten Rohrstückes gelegenes Sieb (135).

8. Würfelqualitätsmessvorrichtung nach Anspruch 7, dadurch gekennzeichnet, dass die Umlenkeinrichtung durch eine Umschaltklappe (133) gebildet ist, um je nach Schwenkstellung das Umlaufen der Würfelprobe bzw. das Abführen des Abriebs bzw. der noch stückigen Würfel zu gestatten.

9. Würfelqualitätsmessvorrichtung nach Anspruch 8, dadurch gekennzeichnet, dass das zweite Rohrstück in die als Trichter (128) ausgebildete Zugabeeinrichtung mündet und dass das dritte Rohrstück (134) vom unteren Ende des Trichters (128) wegführt.

10. Würfelqualitätsmessvorrichtung nach Anspruch 9, dadurch gekennzeichnet, dass die Umschaltklappe am unteren Ende des Trichters angeordnet ist und in einer Schwenkstellung den ebenfalls dort angeordneten Auslass sperrt.

11. Würfelqualitätsmessvorrichtung nach einem der vorhergehenden Ansprüche 4 bis 10, gekennzeichnet durch eine automatische Waage (139) unterhalb des Auslasses.

## Claims

1. A method of measuring pellet quality in which the pellets are whirled around in a test apparatus for a predetermined time by means of a flowing, gaseous, conveying medium, in particular air, to generate abraded particles, wherein the abraded particles generated are separated from the pellets which are still in lump-like form and the percentage of the still lump-like pellets, or a corresponding value, is determined, characterized in that, after termination of the predetermined time, the flowing, gaseous, conveying medium is adjusted to automatically carry out the separation inside the test apparatus in such a way that abraded particles are moved with the conveying medium while leaving behind the still lump-like pellets.

2. A method for measuring pellet quality in accordance with claim 1, characterized in that the separation takes place by controlling the strength of the air flow.

3. A method in accordance with claim 1 or claim 2, characterized in that the flowing, gaseous, conveying medium is also used for the cooling of the pellets.

4. A pellet quality measuring apparatus for carrying out the method of one of the preceding claims comprising a supply device (128) for a pellet sample; an abrasion circuit (128, 134, 130) in which the pellet sample is whirled around by means of an air stream (137) generated by a fan (131) thereby causing abraded particles; an outlet for the abraded particles and/or for the pellets which are still in lump-like form; and a weighing device for determining the quantity of the abraded particles which are generated; characterized in that the fan (131) has two speed stages; and in that after supply of the pellet sample a control device switches on the higher speed stage in order to move the pellet sample in the abrasion circuit (138, 134, 130) and subsequently switches over to the lower speed stage, and actuates a deflection device present in the abrasion circuit, in order to convey solely the abraded particles with the air stream and to deflect the latter, as a result of the selected position of the deflection device, to the outlet; and in that after discharge of the abraded particles the control device again switches over to the higher speed stage in order to separately convey the still lump-like pellets to the outlet.

5. A pellet quality measuring apparatus in accordance with claim 4, characterized in that on supply of the pellet sample the control device first switches on the lower speed stage in order to cool the pellet sample.

6. A pellet quality measuring apparatus in accordance with claim 4, characterized in that the air stream generated by the fan (131) simultaneously serves for the cooling of the pellet sample.

7. A pellet quality measuring apparatus in accordance with one of the claims 4 to 6, characterized by an air circulation tube (130) with a first tube piece which leads substantially vertically upwardly away from the fan (131), a second tube piece which leads downwardly again from the first tube piece, and a third tube piece (134) which leads into the first tube piece; and by a sieve (135) disposed in the first tube piece below the third tube piece.

8. A pellet quality measuring apparatus in accordance with claim 7, characterized in that the deflection device is formed by a changeover flap (133), in order to permit, depending on its pivotal position, the circulation of the pellet sample or the discharge of the abraded particles or of the still lump-like pellets.

9. A pellet quality measuring apparatus in accordance with claim 8, characterized in that the second tube piece opens into the feed device which is formed as a funnel; and in that the third tube piece (134) leads away from the lower end of the funnel (128).

10. A pellet quality measuring apparatus in accordance with claim 9, characterized in that the changeover flap is arranged at the lower end of the funnel and in one pivotal position blocks the outlet which is likewise arranged there.

11. A pellet quality measuring apparatus in accordance with one of the preceding claims 4 to 10, characterized by an automatic weighing device (139) beneath the outlet.

## Revendications

1. Procédé pour mesurer la qualité de briquettes, dans lequel un mouvement tourbillonnaire est imprimé aux briquettes dans un appareil de contrôle pour un temps préétabli, au moyen d'un fluide gazeux de transport en circulation, notamment de l'air, afin d'engendrer un produit d'abrasion; le produit d'abrasion engendré est séparé des briquettes se trouvant encore à l'état de morceaux; et l'on détermine respectivement le pourcentage des briquettes se trouvant encore à l'état de morceaux, ou une valeur correspondante, caractérisé par le fait que, à l'achèvement du temps préétabli, le fluide gazeux de transport en circulation est réglé à l'intérieur de l'appareil de contrôle, en vue d'une exécution automatique de la séparation, de telle sorte que le produit d'abrasion soit entraîné avec le fluide de transport lorsqu'il quitte les briquettes se trouvant encore à l'état de morceaux.

2. Procédé pour mesurer la qualité de briquettes selon la revendication 1, caractérisé par le fait que la séparation a lieu par commande de l'intensité du courant d'air.

3. Procédé selon la revendication 1 ou 2, caractérisé par le fait que le fluide gazeux de transport en circulation est également utilisé pour refroidir les briquettes.

4. Dispositif pour mesurer la qualité de briquettes, pour la mise en œuvre du procédé selon l'une des revendications précédentes, comprenant un dispositif (128) de délivrance d'un échantillon de briquettes; un circuit d'abrasion (128, 134, 130) dans lequel un mouvement tourbillonnaire est imprimé à l'échantillon de briquettes au moyen d'un courant d'air (137) engendré par un ventilateur (131), en donnant alors un produit d'abrasion; une sortie du produit d'abrasion ou, respectivement, des briquettes se trouvant encore à l'état de morceaux; et une balance pour déterminer le produit d'abrasion engendré, caractérisé par le fait que le ventilateur (131) présente deux paliers de vitesse; par le fait que, après la délivrance de l'échantillon de briquettes, un dispositif de commande enclenche le palier de vitesse supérieur pour mettre l'échantillon de briquettes en mouvement dans le circuit d'abrasion (128, 134, 130), puis commute ensuite au palier de vitesse inférieur et actionne un dispositif de déviation situé dans le circuit d'abrasion, pour acheminer seulement le produit d'abrasion avec le courant d'air et pour dévier ce dernier vers la sortie, du fait de la position sélectionnée du dispositif de déviation; et par le fait que, après le rejet du produit d'abrasion, le dispositif de commande commute de nouveau au palier de vitesse supérieur pour acheminer séparément, vers la sortie, les briquettes se trouvant encore à l'état de morceaux.

5. Dispositif pour mesurer la qualité de briquettes selon la revendication 4, caractérisé par le fait que, lors de la délivrance de l'échantillon de briquettes, le dispositif de commande enclenche tout d'abord le palier de vitesse inférieur, afin de refroidir l'échantillon de briquettes.

6. Dispositif pour mesurer la qualité de briquettes selon la revendication 4, caractérisé par le fait que le courant d'air engendré par le ventilateur (131) sert simultanément au refroidissement de l'échantillon de briquettes.

7. Dispositif pour mesurer la qualité de briquettes selon l'une des revendications 4 à 6, caractérisé par un tube (130) de circulation d'air comprenant un premier tronçon tubulaire qui part du ventilateur (131) et s'étend sensiblement verticalement vers le haut, un deuxième tronçon tubulaire qui s'étend à nouveau vers le bas à partir du premier tronçon tubulaire, et un troisième tronçon tubulaire (134) qui débouche dans le premier tronçon tubulaire; et par un crible (135) installé dans le premier tronçon tubulaire, au-dessous du troisième tronçon tubulaire.

8. Dispositif pour mesurer la qualité de briquettes selon la revendication 7, caractérisé par le fait que le dispositif de déviation est formé par un volet sélecteur (133) pour autoriser, selon la position prise par par pivotement, la circulation de l'échantillon de briquettes ou le rejet respectif du produit d'abrasion ou des briquettes se trouvant encore à l'état de morceaux.

9. Dispositif pour mesurer la qualité de briquettes selon la revendication 8, caractérisé par le fait que le deuxième tronçon tubulaire débouche dans le dispositif de délivrance réalisé sous la forme d'un entonnoir (128); et par le fait que le troisième tronçon tubulaire (134) part de l'extrémité inférieure de l'entonnoir (128).

10. Dispositif pour mesurer la qualité de briquettes selon la revendication 9, caractérisé par le fait que le volet sélecteur est installé à l'extrémité inférieure de l'entonnoir et bloque, dans une position prise par pivotement, la sortie également située à cet endroit.

11. Dispositif pour mesurer la qualité de briquettes selon l'une des revendications précédentes 4 à 10, caractérisé par une balance automatique (139) au-dessous de la sortie.